Europäisches Patentamt

European Patent Office

Office européen des brevets

(11) Publication number: **0 310 402**
**A1**

## (12) EUROPEAN PATENT APPLICATION

(21) Application number: 88309072.2

(22) Date of filing: 29.09.88

(51) Int. Cl.⁴: **B 60 T 1/06**
**F 16 H 9/12**

(30) Priority: 30.09.87 JP 150756/87

(43) Date of publication of application:
05.04.89 Bulletin 89/14

(84) Designated Contracting States: **DE FR GB IT SE**

(71) Applicant: BANDO CHEMICAL INDUSTRIES, LIMITED
2-15, Meiwa-dori 3-chome
Hyogo-ku Kobe-shi (JP)

(72) Inventor: Matsumoto, Hideki
2-15, Meiwa-dori 3-chome
Hyogo-ku Kobe-shi (JP)

(74) Representative: Brooke-Smith, Fred et al
STEVENS, HEWLETT & PERKINS 5 Quality Court
Chancery Lane
London WC2A 1HZ (GB)

(54) Pulley type continuously-variable speed-shifting device.

(57) A continuously-variable speed-shifting device having driving (4) and driven (10) pulleys mounted on respective transmission shafts (1, 2) and engaged by a belt (7), the effective radii of the pulleys (4, 10) being variable in the known manner, brake equipment is provided to brake the driven pulley (10) by using a braking member (22) against a movable sideplate (13c) of the pulley (10) when the effective radius of the driven pulley (10) is at its maximum, thereby to interrupt the power transmisison between the transmission shafts (1, 2), utilizing the axial movement of the movable sideplate (13) of the driven pulley (10) to the cooperating fixed sideplate (12). A substantially constant braking force is thus applied automatically to the driven pulley (10) on interruption of the power transmitted.

Fig.1

**Description**

### PULLEY TYPE CONTINUOUSLY-VARIABLE SPEED-SHIFTING DEVICE

This invention relates to pulley type continuously-variable speed-shifting devices utilized for example in agricultural implements.

A well-known pulley type continuously-variable speed-shifting device comprises a continuously-variable speed-shifting device including a pair of transmission shafts disposed parallel to each other, a driving pulley and a driven pulley respectively mounted on the two shafts, each of which pulleys has first and second sideplates mounted on the shaft and jointly forming a groove for a drive belt, the first sideplate being fixed against rotation and axial movement relative to the shaft, and the second sideplate being axially movable but rotationally fixed relative to the shaft, and a belt engaged in the grooves of the two pulleys, whereby the transmission ratio between said shafts can be changed by varying the effective radii of the said pulleys for said belt by moving the movable sideplates of the respective pulleys towards and away from the fixed sideplates.

In this kind of continuous speed-shifting device, in order to smooth the starting motion of an agricultural implement or other machine in which the speed-shifting device is installed, power transmission between the input and output shafts is conventionally interrupted to provide a neutral condition when the transmission ratio between the input and output shafts reaches a lower limit value, at which the effective radius of a driving pulley is a minimum and of driven pulley a maximum. However, the machine keeps moving even though the device is shifted into the neutral condition by reason of the momentum of the machine with the result that the machine cannot be stopped immediately. Therefore, a brake equipment is desirable to brake the rotation of the output shaft in the neutral condition.

As disclosed in Jikkosho 38-19424 Official Gazette in Japan, there is a known brake equipment for this purpose including an operating lever which swings with axial movement of the movable sideplate of the driving pulley, a lining at one end of the operating lever operates on the fixed sideplate of the driven pulley to stop the rotation of the driven pulley, the lining being contacted by the fixed sideplate by rotation of the operating lever in the neutral condition, when the effective radius of the driving pulley reaches the minimum value.

However, since this known arrangement braking is produced by pressing the lining towards the fixed sideplate, the handling force increases in proportion to the braking force, and an additional operating lever and maintenance due to wear abrasion of lining are required. Moreover, the braking force cannot be made uniform.

The object of this invention is to provide brake equipment in a pulley type continuously-variable speed-shifting device in which the braking force is kept constant without the influence of a handling force and in which the braking operation can be carried out without any other operating lever.

According to this invention, there is provided brake equipment comprising a braking member adapted for braking said driven pulley, having a part for contacting the movable sideplate of the driven pulley to stop rotation thereof, a support member supporting said braking member and movable parallel to said transmission shaft, said support member being arranged to position the contacting part of said braking member such that the contacting part contacts the movable sideplate when the effective radius of said driving pulley is the minimum and that of said driven pulley is the maximum thereby to interrupt power transmission between the transmission shafts and moves out of contact with the movable sideplate of the driven pulley when the effective radius of the driving pulley is greater than the minimum and that of the driven pulley is lower than the maximum, and spring means biasing said contacting part towards said movable sideplate.

Thus the brake equipment is arranged so that the braking member is contacted with the movable sideplate instantly on reaching the neutral condition by utilizing the movement of the movable sideplate, based on the fact that the movable sideplate is then at its nearest to the fixed sideplate, maximizing the effective radius of the driven pulley in the neutral condition when the power transmission between the shafts is interrupted.

In one preferred construction according to the invention, the movable sideplate of the driven pulley has a radial flange which extends away from the fixed sideplate and which has a friction braking face at its side facing towards the fixed sideplate. The braking member has a contacting part which faces the friction braking face of the flange and is arranged so that said friction face contacts the contacting part of said braking member when the movable sideplate is moved towards said fixed sideplate into the neutral condition.

In another preferred arrangement according to the invention, the movable sideplate of the driven pulley has a braking face facing towards the fixed sideplate. The braking member is mounted at a bottom of the belt groove between the movable sideplate and the fixed sideplate and has a contacting part which faces the friction face of the movable sideplate, arranged so that the friction face comes into contact with the contacting part of the braking member when the movable sideplate is moved towards the fixed sideplate into the neutral condition.

Two embodiments of the invention will now be described by way of example with reference to the accompanying drawings in which:

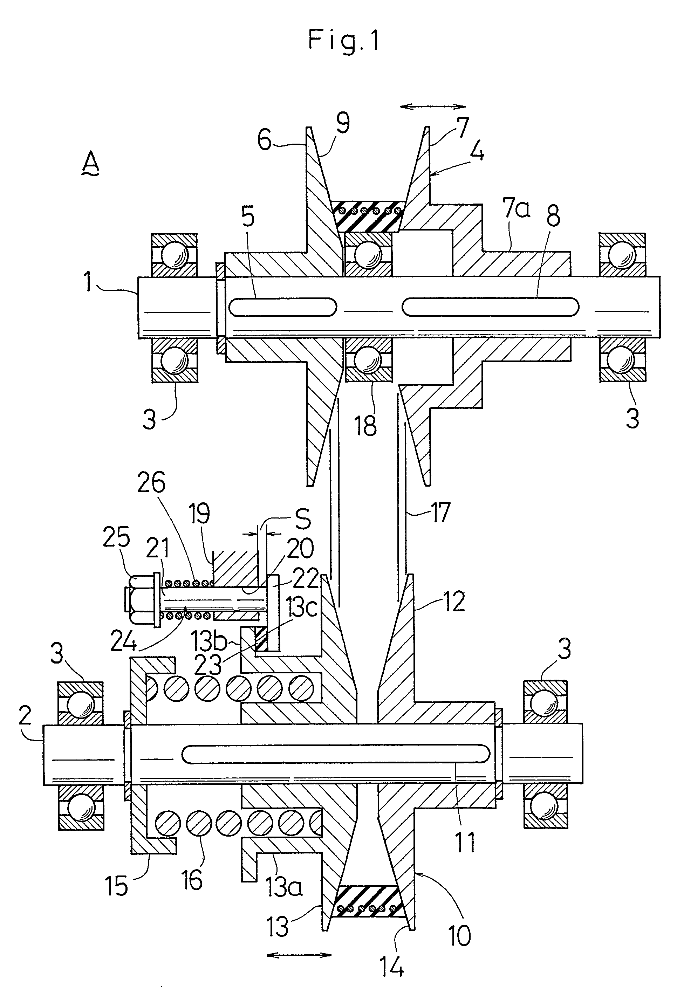

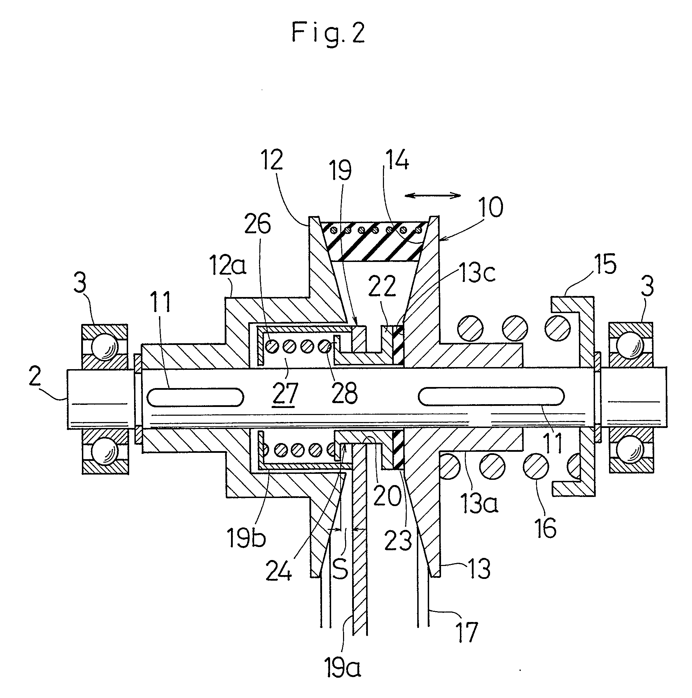

Figures 1 and 2 are sectional views of the two embodiments respectively.

Figure 1 shows a first embodiment of this invention used in a speed-shifting device (A) which is installed in an agricultural implement, e.g. a combine. An input shaft 1 serving as one of the transmission shafts is placed in parallel with an output transmission shaft 2. The input shaft 1 is connected to an engine (not shown) mounted on the combine, and the output shaft 2 is connected to the wheels. A casing (not shown) supports the input and output shafts 1, 2 through ball bearings 3. There are provided a driving pulley 4 and a driven pulley 10 on the input shaft 1 and output shaft 2 respectively. The driving pulley 4 has a (fixed) sideplate 6 fixedly mounted on the input shaft 1 by way of a key 5, and a movable sideplate 7 axially slidably and solidly rotatably mounted on the input shaft 1 by way of a key 8 in a boss 7a of the sideplate 7 so as to face the fixed sideplate 6. A V-shaped belt groove 9 is formed between the sideplates 6, 7.

The driven pulley 10 on the output shaft 2 is arranged similarly to the driving pulley 4. Thus the driven pulley 10 comprises a fixed sideplate 12 solidly rotatably and axially non-slidably mounted on the output shaft 2 by way of a key 11, and a movable sideplate 13 axially slidably and solidly rotatably mounted on the output shaft 2 by way of the key 11 so as to face the fixed sideplate 12 but in the opposite direction to that in which the movable sideplate 7 faces the fixed sideplate 6 of the driving pulley 4 on the input shaft 1. A V-shaped belt groove 14 is formed between the sideplates 12, 13. A spring retainer 15 is solidly fixed on the output shaft 2 at the side of the movable sideplate 13 remote from the fixed sideplate 12. A spring 16 is disposed between the spring retainer 15 and the rear of the movable sideplate 13 to bias the movable sideplate 13 towards the fixed sideplate 12. A V-belt 17 extends about pulleys 4 and 10, engaging in the belt grooves 9, 14 thereof. The effective radii of the engagement of the V-belt 17 with the driving and driven pulleys 4, 10 are adjusted by moving the movable sideplate 7 towards and away from the fixed sideplate 6 of the driving pulley 4. For example, when the movable sideplate 7 is moved towards the fixed sideplate 6, the transmission ratio between the input and output shafts 1, 2 is increased and the effective radius of the driven pulley 10 decreases by moving the movable sideplate 13 of the driven pulley 10 away from the fixed sideplate 12 against the bias force of the spring 16 under the tension of the V-belt 17 caused by increase of the effective radius of the driving pulley 4. Conversely, when the movable sideplate 7 of the driving pulley 4 is moved away from the fixed sideplate 6, the transmission ratio between the input and output shafts 1, 2, is decreased in that the effective radius of the driven pulley 10 is increased by movement of the movable sideplate 13 of the driven pulley 10 towards the fixed sideplate 12 under the bias force of the spring 16.

A base circular clutch 18 comprising a ball bearing the outer periphery of which serves as a belt riding face is supported on the input shaft 1 between the sideplates 6, 7 of the driving pulley 4 (in the bottom of the belt groove 9), so that the belt 17 rides on the base circular clutch 18 to intercept the engagement of the V-belt 17 with the input shaft 1 through the driving pulley 4 and to interrupt transmission of the rotational power between the input and output shafts 1, 2 and to place the device in a neutral condition when the effective radius of the driving pulley 4 is a minimum and that of the driven pulley 7 is a maximum.

The movable sideplate 13 of the driven pulley 10 has formed integrally with it a rearwardly-extending boss and a radial flange 13b which has a brake face 13c facing the movable sideplate 13.

A supporting member 19 is secured in the casing near the flange 13b and has therein a hole 20 extending parallel to the input and output shafts 1, 2, in which a rod 21 is axially slidably held. A brake shoe 22 including an end part which faces the brake face 13c of flange 13 is secured on the end of the rod 21. An arc shaped friction lining 23 is secured to the brake shoe 22 for engaging the flange face 13c. Consequently, in this embodiment, the braking member 24 for braking the driven pulley 10 comprises the rod 21, brake shoe 22 and lining 23.

An adjusting spring 26 is disposed about the opposite end part of rod 21 between the support member 19 and a nut 25 for adjusting the spring force. The adjusting spring 26 biases the braking member 24 in a direction to urge the lining 23 into contact with the friction face 13c of the flange 13b of sideplate 13.

The braking member 24 is supported by the supporting member 19 for movement parallel to the output shaft 2, and is positioned so that the lining 23 contacts the friction face 13c of the movable sideplate 13 during movement of the braking member 24 towards the fixed sideplate 12 by a predetermined distance S in the neutral condition when the power transmission between the input and output shafts 1, 2 is interrupted in accordance with the operation of the base circular clutch 18, and so that the lining 23 of the braking member 24 moves away the friction face 13c of the movable sideplate 13 in the non-neutral condition.

Operation of the above described embodiment is as follows.

When the device is to be shifted from usual condition to a high speed mode by increasing the transmission ratio between the input and output shafts 1, 2, the movable sideplate 7 of the driving pulley 4 is moved towards the fixed sideplate 6 (to the left direction in the drawing) to increase the effective radius of the driving pulley 4. Corresponding to this increase of the effective radius of the driving pulley 4, the V-belt 17 is drawn towards the driving pulley 4 against the bias force of the spring 16. The movable sideplate 13 of the driven pulley 10 is moved away from the fixed sideplate 12 by the movement of the V-belt 17 to decrease the effective radius of the driven pulley 10. As a result, the rotational speed of the output shaft 1 is increased.

Conversely, when the device is to be shifted to a low speed mode by decreasing the transmission ratio between the input and output shafts 1, 2, the movable sideplate 7 of the driving pulley 4 is moved towards the fixed sideplate 6 (to the right in the drawing) to decrease the effective radius of the driving pulley 4. In correspondence with this decrease of the effective radius of the driving pulley 4, the V-belt 17 is drawn toward the driven pulley 10 by the bias force of the spring 16. The movable sideplate 13 of the driven pulley 10 is moved towards the fixed sideplate 12 by the movement of the V-belt 17 to increase the effective radius of the driven pulley 10. As a result, the rotational speed of the output shaft 1 is reduced.

The V-belt rides on the base circular clutch 18 between the sideplates 6, 7 of the driving pulley 4 to interrupt transmission of the rotational power between the input and output shafts 1, 2 to bring about the neutral condition when the movable sideplate 7 of the driven pulley 10 is at the farthest position from the fixed sideplate 6 and the movable sideplate 13 of the driven pulley 10 is at the nearest position to the fixed sideplate 12. At the same time, the brake flange 13b of the movable sideplate 13 is urged towards the brake shoe 22 of the braking member 24 to move the friction face 13c into contact with the lining 23 on the brake shoe 22 caused by the movement of the movable sideplate 13 of the driven pulley 10 towards the fixed sideplate 12, whereafter it moves by a distance S compressing the adjusting spring 26. The movable sideplate 13 and in consequence the driven pulley 10 and the input shaft 2 are braked to a stop. Therefore, the output shaft 2, and the wheels and other parts driven thereby can be braked to a stop immediately.

In this case, since the braking member 24 is biased by the adjusting spring 26 in a direction to make contact with the brake flange 13b of the movable sideplate 13, the lining 23 keep contacting with the friction face 13c with a bias force of the adjusting spring 26 during the movement of the braking member 24 by the predetermined distance S after the friction face 13c of the movable sideplate 13 contacts the lining 23 of the braking member 24. Therefore, the driven pulley 10 and the output shaft 2 can be braked with a required braking force without the application of an external handling force since the shoe 23 on the lining 22 is automatically contacted with the friction face 13c of the movable sideplate 13 to brake the output shaft 2.

The braking force is easily changeable by adjusting the bias force of the adjusting spring 26 by means of the nut 25 on the rod 21 of the braking member 24.

Subsequently, when the moveable sideplate 7 of the driving pulley 4 is moved away from the fixed sideplate 6 to increase the effective radius of the driving pulley 4, the V-belt 17 is moved from the base circular clutch 18 to the belt groove 9, and the input and output shafts 1, 2 are put into engagement to transmit power therebetween i.e. in non-neutral condition. Corresponding to this movement, the movable sideplate 13 of the driven pulley 10 is moved from the fixed sideplate 12 to decrease the effective radius thereof. However, the brake shoe 22 can be displaced only by the predetermined distance S due to the movement of the movable sideplate 13, being prevented from moving further by the supporting member 19, with the result that the friction face 13c of the brake flange 13b separates from the lining 22 of the brake shoe 23 releasing the driven pulley 10 and the output shaft 2 from braking condition.

Figure 2 shows the second embodiment of this invention. Since part of this embodiment is basically similar to the first embodiment, the detail explanation of the parts equivalent to those in the first embodiment and with the same reference numerals is omitted.

In this embodiment the braking member 24 is located at the bottom of the belt groove 14 between the fixed sideplate 12 and the movable sideplate 13 of the driven pulley 10, that is to say the annular flat braking face 13c is formed on the inner, belt-groove forming, face of the movable sideplate 13 of the driven pulley 10. A hollow boss part 12a of the fixed sideplate 12 forms a space 27 about the output shaft 2. A flat ring shaped supporting member 19 is immovably fixed to the casing through a connecting rod part 19a. A cylindrical braking member 24 is slidably and non-rotatably mounted and supported in a hole 20 in the supporting member 19. The output shaft 2 extends through the braking member 24. The brake shoe 22 is in the form of a flange of the braking member 24 at the end thereof facing towards the movable sideplate 13 (at the right in the drawing). A spring retaining flange 28 is formed at the opposite end of member 24. A flat annular lining 23 for contacting the friction face 13c of the movable sideplate 13 is secured to the side of the brake shoe 22 facing to the movable sideplate 13. A hollow cylindrical spring retaining part 19b is secured by one end to the supporting member 19 and extends into the space 27 between the boss 12a of the fixed sideplate 12 and the output shaft 2 surrounding the spring retaining flange 28 of the braking member 24. The adjusting spring 26 is held within the end part of the spring retaining part 19b and the spring retaining part 28 of the braking member 24 to bias the braking member 24 in a direction to urge the lining 23 of the brake shoe 22 towards the braking face 13c of the movable sideplate 13.

Therefore, in this embodiment, in the neutral condition when the movable sideplate 13 of the driven pulley 10 is moved nearest to the fixed sideplate 12 to interrupt the power transmission between the input and output shafts 1, 2, the braking face 13c of the movable sideplate 13 contacts the lining 23 on the brake shoe 22 of the braking member 24, with the result that the driven pulley 10 and the output shaft 2 are braked to a stop. Therefore, in this embodiment, the same working effect can be derived as first embodiment. In addition, the brake equipment can be more compact since the braking member 24 and the spring 26 are disposed between the sideplates 12, 13.

The device of this invention can be used not only in speed-shifting devices for combines but also in pulley type continuously-variable speed-shifting devices for other agricultural implements, motorcars and general industrial machines.

The equipment of this invention can be effectively utilized in pulley type continuously-variable speed-shifting devices used as transmission apparatus where a comparatively small load is applied in a combine or other agricultural implements, motorcars or other machines where movement of the driven pulley by momentum occurs even when the power transmission to the driven pulley is interrupted by a shift operation into the neutral condition.

**Claims**

1. A continuously-variable speed-shifting device including a pair of transmission shafts disposed parallel to each other, a driving pulley and a driven pulley respectively mounted on the two shafts, each of which pulleys has first and second sideplates mounted on the shaft and jointly forming a groove for a drive belt, the first sideplate being fixed against rotation and axial movement relative to the shaft, and the second sideplate being axially movable but rotationally fixed relative to the shaft, and a belt engaged in the grooves of the two pulleys, whereby the transmission ratio between said shafts can be changed by varying the effective radii of the said pulleys for said belt by moving the movable sideplates of the respective pulleys towards and away from the fixed sideplates, characterised by brake equipment comprising a braking member adapted for braking said driven pulley, having a part for contacting the movable sideplate of the driven pulley to stop rotation thereof, a support member supporting said braking member and movable parallel to said transmission shaft, said support member being arranged to position the contacting part of said braking member such that the contacting part contacts the movable sideplate when the effective radius of said driving pulley is the minimum and that of said driven pulley is the maximum thereby to interrupt power transmission between the transmission shafts and moves out of contact with the movable sideplate of the driven pulley when the effective radius of the driving pulley is greater than the minimum and that of the driven pulley is lower than the maximum, and spring means biasing said contacting part towards said movable sideplate.

2. A speed-shifting device as claimed in Claim 1, characterised in that said movable sideplate of said driven pulley has a radial flange shaped friction plate part which extends outwardly and at its side further from the co-operating fixed sideplate.

3. A speed-shifting device as claimed in Claim 2, characterised in that said contacting part is arranged for engagement with the face of the flange nearest the movable sideplate.

4. A speed-shifting device as claimed in Claim 1, characterised in that said movable sideplate of said driven pulley has a brake face facing towards said fixed sideplate, and in that said braking member is mounted at the bottom of the belt groove between the movable sideplate and the fixed sideplate, the contacting part being arranged for engagement with said brake face of the driven pulley.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CH-A- 248 916 (SAURER)<br>* Pages 1,2; figures *<br>--- | 1-4 | B 60 T 1/06<br>F 16 H 9/12 |
| A | FR-A- 999 608 (GOODRICH)<br>* Pages 1-2; figures *<br>--- | 1-4 | |
| A | GB-A-2 116 663 (TURNER)<br>----- | | |

TECHNICAL FIELDS
SEARCHED (Int. Cl.4)

B 60 T 1/00
B 60 K 41/00
F 16 H 7/00

The present search report has been drawn up for all claims

| Place of search | Date of completion of the search | Examiner |
|---|---|---|
| THE HAGUE | 15-12-1988 | FLORES E. |

EPO FORM 1503 03.82 (P0401)